Europäisches Patentamt

European Patent Office

Office européen des brevets

(19)

(11) Numéro de publication: **0 148 705**
**A2**

# (12) DEMANDE DE BREVET EUROPEEN

(21) Numéro de dépôt: **84402738.3**

(22) Date de dépôt: **27.12.84**

(51) Int. Cl.⁴: **H 04 N 9/67**

(30) Priorité: **06.01.84 FR 8400175**

(43) Date de publication de la demande: **17.07.85**
**Bulletin 85/29**

(84) Etats contractants désignés: **DE GB IT SE**

(71) Demandeur: **THOMSON-CSF, 173, Boulevard Haussmann, F-75379 Paris Cedex 08 (FR)**

(72) Inventeur: **Reymond, Jean-Claude, THOMSON-CSP SCPI - 173, bld Haussmann, F-75379 Paris Cedex 08 (FR)**

(74) Mandataire: **Trocellier, Roger et al, THOMSON-CSF SCPI 173, Bld Haussmann, F-75379 Paris Cedex 08 (FR)**

(54) Système de traitement de signaux vidéo d'images en vue d'une visualisation monochrome.

(57) Le système de traitement permet, à partir de signaux vidéo relatifs à des longueurs d'ondes différentes, de représenter une image monochrome portant un grand nombre d'informations et particulièrement de renforcer ces informations.

Il comprend principalement un circuit de traitement (10) pour convertir, en chaque point de l'image, les différentes composantes (R,V,B) sous la forme d'un seul paramètre de luminance $L = \alpha R + \beta V + \gamma B$ et un circuit de traitement additionnel (5) pour calculer préalablement, pour chaque point de chaque image, les coefficients $\alpha, \beta, \gamma$ en fonction des variations des différentes composantes. L'invention prévoit en particulier de calculer ces coefficients proportionnellement aux gradients des différentes composantes.

L'invention s'applique à l'observation visuelle, à l'interprétation d'images et au camouflage.

1

# SYSTEME DE TRAITEMENT DE SIGNAUX VIDEO D'IMAGES
# EN VUE D'UNE VISUALISATION MONOCHROME.

La présente invention concerne les systèmes de traitement de signaux vidéo relatifs à des longueurs d'ondes différentes en vue d'une visualisation monochrome, et plus précisément des aménagements à de tels systèmes pour accroître le nombre d'informations visualisées et améliorer le confort de l'observation.

Certains dispositifs capteurs d'images, tels les caméras de télévision, fonctionnent dans plusieurs longueurs d'ondes optiques. Par exemple, une caméra de télévision couleur reçoit et exploite simultanément trois images de la même scène, la première en rouge, la deuxième en vert, la troisième en bleu.

En télévision couleur, les trois images sont transformées en signaux vidéo et transmises au récepteur. On s'efforce, dans ce dernier, de restituer au mieux les trois couleurs, de façon à ce que l'observateur perçoive, grâce à la synthèse des couleurs, une image la plus fidèle de la scène originale.

Lorsque le récepteur n'est pas équipé pour recevoir l'image en couleur, il ne peut exploiter qu'un signal dit de luminance, qui peut être obtenu en effectuant une somme pondérée des trois signaux vidéo rouge, vert et bleu initiaux. Soit L (x,y) le signal de luminance, et R (x,y), V(x,y), B(x,y) respectivement les signaux rouge, vert et bleu, le signal L(x,y) est de la forme :

$$L(x,y) = \alpha .R(x,y) + \beta .V(x,y) + \gamma .B(x,y),$$

où x.y sont les coordonnées d'un point considéré de l'image.

Le jeu de coefficients $\alpha$ ,$\beta$ ,$\gamma$ est fixé une fois pour toutes en tenant compte d'un rendu chromatique moyen satisfaisant, qui permet d'observer en noir et blanc, c'est-à-dire en monochrome, une image réunissant les informations des trois images chromatiques.

En faisant une combinaison linéaire des signaux avec des coefficients constants, comme il est dit ci-dessus, on n'extrait donc pas le maximum du contenu informationnel, notamment les transitions, contenu dans une image trichrome.

En effet, sur une image la véritable information n'est pas principalement constituée par la valeur du signal en un point de l'image, mais par sa variation. Considérant une image dans laquelle le signal est constant, même s'il est maximal, il représente un fond uniforme et il n'y a pas d'information dans cette image. Par contre, un dessin executé au crayon noir sur une feuille blanche ne porte d'information qu'aux points où il y a variation du noir et blanc.

Dans une même zone considérée d'une image couleur, la valeur des trois composantes R, V, B est généralement différente .La richesse en information dans la même zone de l'image n'est donc pas la même dans les trois images chromatiques. De plus, selon la zone de l'image considérée, l'une des images chromatiques porte plus d'informations que la seconde, qui en porte elle-même plus que la troisième. Dans une autre zone de la même image, l'ordre pourra être différent.

Le but de l'invention est de représenter une image monochrome portant un maximum d'informations et plus particulièrement de renforcer ces informations en tenant compte des variations de chacun des signaux chromatiques.

Une particularité de l'invention est de calculer à chaque instant les coefficients $\alpha, \beta, \gamma$ en fonction des variations des signaux, en particulier, proportionnellement à leurs gradients respectifs.

Par ailleurs, il est décrit dans le document de brevet français 82.09047 du 25 mai 1982 et publié sous le numéro 2 527 881, un système de traitement vidéo d'images en couleurs, mais pour une visualisation en couleurs. Celui-ci comporte des moyens de traitement pour convertir les composantes rouge R, verte V et bleue B, conventionnelles en un paramètre de luminance L et seulement deux paramètres de chrominance, indépendants et évoluant dans l'espace à deux dimensions constitué par le diagramme des couleurs. Il comporte en outre, des moyens de traitement additionnels pour convertir à leur tour ces paramètres de chrominance en un paramètre unique T permettant de définir une chrominance évoluant dans un espace à une seule dimension. Chaque valeur de T correspond à une pluralité de points du diagramme auxquels on fait correspondre une couleur selon une charte de couleurs. On reforme ensuite à partir des paramètres L et T des valeurs prédéterminées des composantes couleurs pour la visualisation. Les moyens de traitement additionnels sont constitués par un ensemble logique de calcul ou de circuits opérateurs. Les moyens de conversion inverse comportent une mémoire vive programmée constituant la charte de couleurs et ayant trois sorties, et trois circuits multiplicateurs pour multiplier par la valeur de luminance L les signaux de la mémoire et reformer trois composantes chromatiques.

Selon l'invention on propose un système de traitement de signaux vidéo relatifs à des longueurs d'ondes différentes en vue d'effectuer une visualisation monochrome, comportant des moyens de traitement pour convertir chaque point de l'image, les différentes composantes R,V,B en un paramètre de luminance L de la forme $\alpha R + \beta V + \gamma B$, où $\alpha, \beta, \gamma$ sont des coefficients déterminés pour l'obtention de la visualisation monochrome, caractérisé en ce qu'il comporte des moyens de traitement additionnels pour calculer préalablement pour chaque point de chaque image lesdits coefficients en fonction des variations des différentes composantes R,V,B en ce point et à proximité. Une particularité de l'invention est de calculer ces coefficients proportionnellement aux gradients des différentes composantes selon les relations $\alpha = A.r$ $\beta = A.v$ $\gamma = A.b$, où A est un paramètre quelconque.

Les particularités de l'invention apparaîtront dans la description qui suit donnée à titre d'exemple non limitatif, à l'aide des figures annexées qui représentent :

Fig.1, un diagramme général d'un système de traitement de signaux vidéo selon l'invention,

Fig.2, un diagramme relatif à un circuit de traitement additionnel utilisé dans un système conforme à l'invention,

Fig.3, un diagramme d'un exemple de réalisation de l'invention sous la forme d'un système à microprocesseur.

Pour une meilleure compréhension du fonctionnement du système, on utilise tout au long de la description un exemple dans lequel les signaux vidéo reçus comportent trois voies qui correspondent aux trois composantes chromatiques rouge R, verte V, et bleue B, conventionnelles. Il est entendu que le nombre de voies reçues peut être quelconque tout en restant supérieur à 1. Chaque voie correspond à un domaine spectral différent. De même, on décrit l'invention dans le cas où les coefficients $\alpha$, $\beta$ et $\gamma$ sont proportionnels aux gradients des différentes composantes R,V,B, mais ceux-ci peuvent être calculés sur des bases différentes.

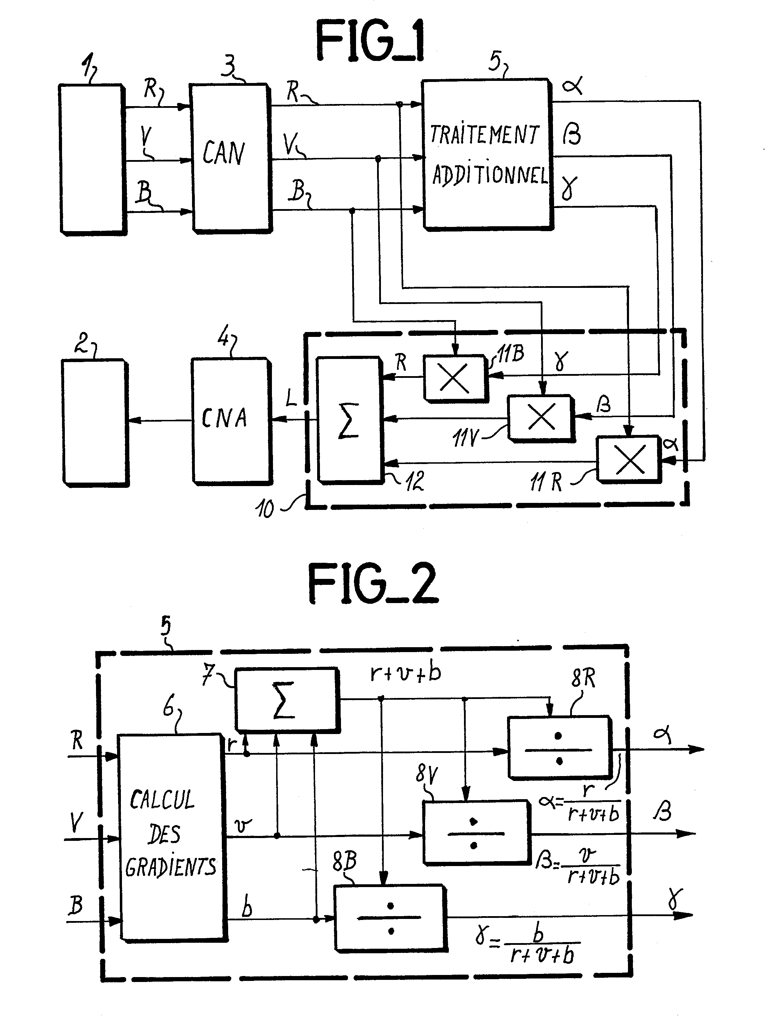

La figure 1 représente une chaîne vidéo complète aménagée conformément à l'invention. Cette chaîne part d'un générateur 1 de signal vidéo couleur et aboutit à une unité d'utilisation 2, moniteur de visualisation ou autre dispositif. Le bloc 3 est un convertisseur analogique-numérique dans l'hypothèse où le générateur 1 délivre les signaux vidéo des voies R,V,B, sous forme analogique. Dans le même aspect, le convertisseur numérique-analogique 4 est prévu lorsque l'utilisation 2 exige cette forme de signal. Les autres blocs représentent des circuits de traitement.

Un circuit de traitement 10 élabore le signal $L = \alpha.R + \beta V + \gamma B$ de luminance, qui est transmis à l'unité d'utilisation 2 après conversion numérique-analogique en 4. A cet effet, des circuits multiplicateurs 11R, 11V, 11B reçoivent d'une part, les signaux des composantes numérisées R,V,B, et d'autre part, les coefficients $\alpha$, $\beta$ et $\gamma$. Ces coefficients sont élaborés par un circuit de traitement additionnel 5. Un exemple de ce circuit sera décrit ultérieurement. Les produits $\alpha.R$, $\beta.V$ et $\gamma.B$, issus des multiplicateurs, sont appliqués à l'entrée d'un circuit sommateur 12 qui délivre la valeur L.

Toutes ces opérations sont effectuées pour chaque point de l'image couleur initiale.

- 5

Le circuit de traitement additionnel représenté figure 2, calcule les coefficients $\alpha$, $\beta$ et $\gamma$ en fonction des variations des signaux. En effet, pour élaborer une image présentant un contenu informationnel élevé, on propose pour chaque point de chaque image, d'évaluer les variations des signaux vidéo et d'élaborer les coefficients proportionnellement à ces variations pour pondérer chacune des composantes R,V,B et renforcer ainsi chacune d'elles d'autant plus que sa variation est plus forte. De cette manière, deux objets adjacents dont les couleurs sont différentes, mais qui ne se distinguent pas dans une visualisation traditionnelle en noir et blanc, peuvent être distingués en utilisant le principe précité. En effet, si il y a variation notoire d'une composante, d'un objet à l'autre, cette variation va se trouver accentuée et les points de l'image faisant partie de la zone de transition sont visualisés avec une luminance plus forte.

Pour mettre en valeur la variation du signal d'une image, on calcule de préférence le gradient en chacun des point d'une image, ceci pour chacune des composantes R,V,B. Pour une fonction F de deux variables x et y dans un plan défini par deux axes de vecteurs directeurs $\vec{i}$ et $\vec{j}$, le gradient de la fonction se définit par la relation :

$$\overrightarrow{\text{grad}}\, F = \vec{i}\,\frac{\partial F}{\partial x} + \vec{j}\,\frac{\partial F}{\partial y}$$

Pour un observateur, la variation du signal d'une image quelconque d'un point à un autre peut s'apprécier dans n'importe quelle direction. $\overrightarrow{\text{Grad}}\, F$ est une fonction vectorielle et il n'est pas nécessaire de tenir compte de sa direction. On n'en calcule donc que le module qui traduit la rapidité avec laquelle le signal de chaque image élémentaire varie. Le module du gradient se définit comme suit :

$$\left|\overrightarrow{\text{grad}}\, F\,(x,y)\right| = \sqrt{\left(\frac{\partial F}{\partial x}\right)^2 + \left(\frac{\partial F}{\partial y}\right)^2}$$

Pour chaque composante, on calcule le module du gradient :

$$r = \left|\overrightarrow{\text{grad}}\, R(x,y)\right| = \sqrt{\left(\frac{\partial R}{\partial x}\right)^2 + \left(\frac{\partial R}{\partial y}\right)^2}$$

$$v = \left|\overrightarrow{\text{grad}}\, V(x,y)\right| = \sqrt{\left(\frac{\partial V}{\partial x}\right)^2 + \left(\frac{\partial V}{\partial y}\right)^2}$$

$$b = \left|\overrightarrow{\text{grad}}\, B(x,y)\right| = \sqrt{\left(\frac{\partial B}{\partial x}\right)^2 + \left(\frac{\partial B}{\partial y}\right)^2}$$

Pour que les coefficients soient proportionnels aux variations des composantes, ils peuvent être respectivement de la forme :

$$\alpha = A.r \quad \beta = A.v \quad \gamma = A.b$$

où A est un paramètre quelconque, le signal final L devient :

$$L = A.r.R(x,y) + A.v.V(x,y) + A.b.B(x,y).$$

Pour pondérer par rapport à la variation totale des trois composantes, on peut choisir le paramètre A égal à $\dfrac{1}{r+v+b}$. Les coefficients deviennent :

$$\alpha = \frac{r}{r+v+b} \qquad \beta = \frac{v}{r+v+b} \qquad \gamma = \frac{b}{r+v+b}.$$

Sur la figure 2, le circuit de traitement additionnel comporte un circuit de calcul 6 qui calcule et élabore les gradients des signaux r,v,b des composantes R,V et B. Le fonctionnement de ce circuit peut utiliser des techniques de calcul connues et expliquées dans le livre intitulé "Digital Image Processing" de W.K. PRATT édité par John Willey and Son, notamment au chapitre 4 "Image Restoration and Enhancement" pages 305 et suivantes. Ces techniques de calcul utilisent le plus souvent des matrices 3 x 3, par exemple :

$$\begin{pmatrix} 0 & -1 & 0 \\ -1 & 5 & -1 \\ 0 & -1 & 0 \end{pmatrix}$$

On obtient par une telle convolution la fonction dérivée F'(x,y) de F(x,y).

Un premier circuit sommateur 7 reçoit tous les gradients et délivre leur somme r+v+b. Par ailleurs, chacun des gradients est ensuite divisé au moyen d'un circuit diviseur 8R, 8V, 8B par ladite somme. Les sorties des diviseurs délivrent respectivement les coefficients,

$$\alpha = \frac{r}{r,v,b}, \qquad \beta = \frac{v}{r,v,b}, \qquad \gamma = \frac{b}{r,v,b}.$$

On peut envisager de remplacer les circuits sommateur 7 et diviseurs 8R,8V,8B par d'autres, de sorte que l'on obtienne de manière générale $\alpha = A.r \quad \beta = A.v \quad \gamma = A.b$ où A est un paramètre quelconque. De même, il est possible d'utiliser non plus une forme linéaire des gradients r,v,b, mais d'autres fonctions mathématiques monotones du gradient telles que logarithmique ou exponentielle, par exemple

$$\alpha = \text{Log } r, \quad \beta = \text{Log } v, \quad \gamma = \text{Log } b.$$

On peut aussi envisager d'utiliser un circuit de traitement additionnel 5 qui calcule directement le logarithme ou toute autre fonction monotone de chacune des trois composantes R,V,B.

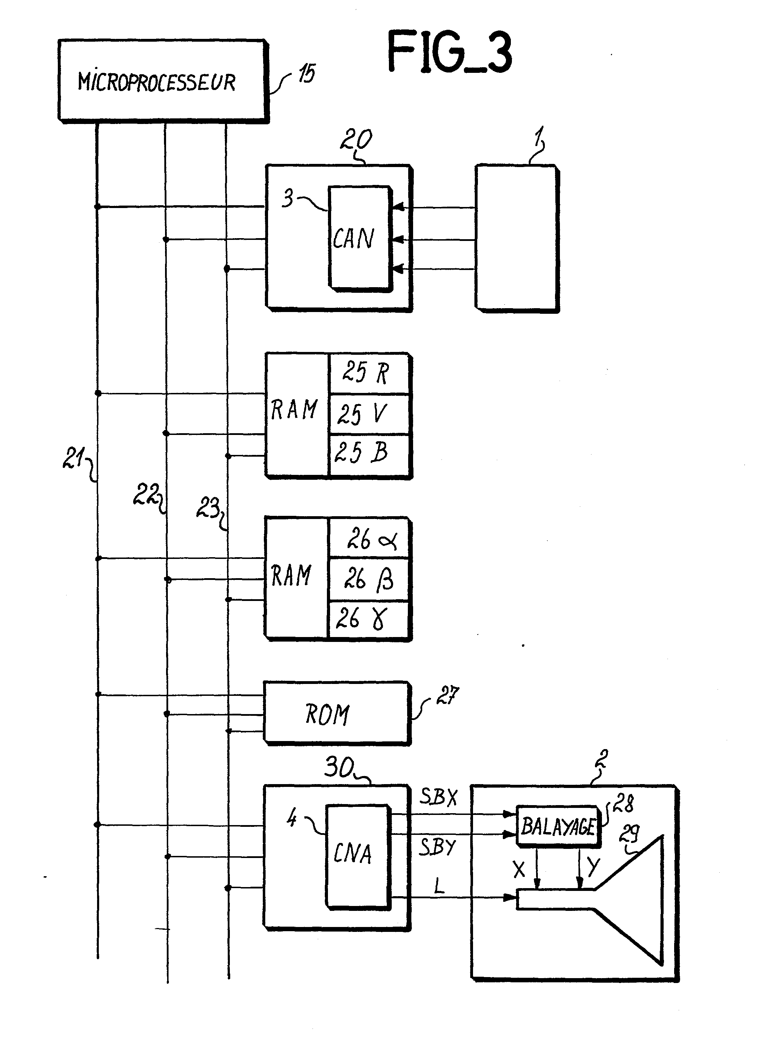

En référence à la figure 3, une réalisation possible du système de l'invention peut être obtenu avec un microprocesseur.

Un circuit d'interfaces d'entrée 20 reçoit les signaux vidéo initiaux issus du générateur 1 et les met sous leur forme numérique de traitement. Il comprend au moins le convertisseur analogique numérique 3 de la figure 1.De même, un circuit d'interfaces de sortie 30 reçoit le signal numérique L et le met sous sa forme d'exploitation. Il comprend au moins le convertisseur numérique analogique 4. Un bus de commande 21, un bus d'adresse 22, un bus de données 23 relient ces circuits d'interfaces et les autres circuits utilisés et notamment des mémoires 25R,25V,25B,26R,26V,26B et 27.

Un microprocesseur 15 assure les calculs, leur séquencement et la gestion de plusieurs mémoires vives 25R, 25V, 25B et 26R,26V,26B, du type à accès aléatoire (RAM), la mémoire 27 étant la mémoire morte (ROM) du microprocesseur 15 dans laquelle sont stockés les différents programmes nécessaires au fonctionnement du système.

Les trois composantes numérisées R,V,B sont stockées chacune dans une première mémoire à accès aléatoire 25R, 25V et 25B. On mémorise tous les points de plusieurs lignes d'une image dans chaque mémoire, de préférence trois lignes. Le nombre de lignes mémorisées est égal à la dimension de la matrice utilisée pour le calcul. En effet, pour évaluer la variation du signal pour un point considéré, il faut disposer des points qui lui sont contigus et qui forment avec lui un carré.

Le microprocesseur comprend les deux circuits de traitement de la figure 1. Il effectue le calcul des coefficients α, β et γ en extrayant successivement les points correspondants des trois premières mémoires 25R, 25V et 25B. Chaque coefficient est stocké dans une deuxième mémoire à accès aléatoire respectivement 26R, 26V et 26B à la même adresse que celle du point auquel il correspond.

L'utilisation 2, dans le cas d'un moniteur de visualisation, comporte un circuit de balayage ligne par ligne 28 qui reçoit des signaux SBX et SBY pour produire les déflexions en X et Y du spot sur l'écran d'un tube de visualisation 29. A l'aide d'un programme de balayage, le microprocesseur commande le circuit de balayage mais également, et en synchronisme, les adresses de lecture de toutes les mémoires vives. Pour élaborer le signal L, le programme de balayage indique l'une après l'autre les adresses des points de l'image, et le microprocesseur va chercher respectivement dans les mémoires rouges 25R et 26R, vertes 25V et 26V, bleues 25B et 26B les données aux adresses désignées. Ces données sont utilisées par le microprocesseur qui calcule le signal L de luminance.

La lecture des premières mémoires 25R, 25V, 25B, le calcul des coefficients et leur écriture dans les deuxièmes mémoires 26R, 26V,26B peuvent être effectués de façon asynchrone par rapport aux entrées des composantes R,V et B dans les premières mémoires. En outre, dans le cas d'une utilisation d'une matrice 3 x 3, le calcul du gradient, pour un point considéré $P_N$ d'une ligne $L_M$, se fait après la mémorisation du point suivant $P_{N+1}$ de la ligne suivante $L_{M+1}$ de façon à pouvoir utiliser les huit points contigus à ce point.

Le système fonctionne dès qu'on dispose d'au moins deux images de la même scène mais de bande spectrale différente et pas obligatoirement de longueur d'ondes visibles, par exemple, 10,6 ou 5 microns (infrarouge thermique), ou infrarouge proche de 1 micron.

Il est possible d'utiliser pour le calcul des coefficients α, β, γ des convolutions avec des matrices de rang supérieur à 3, par exemple des matrices 5 x 5 ou 7 x 7 caractéristiques de fonctions mathématiques autres que le gradient.

Le système peut avantageusement être utilisé pour l'observation visuelle des images, l'interprétation des images et le décamouflage.

## REVENDICATIONS

1. Système de traitement de signaux vidéo d'images relatifs à des longueurs d'ondes différentes, en vue d'effectuer d'une visualisation monochrome, comportant des moyens de traitement (10) pour convertir, en chaque point de l'image, les différentes composantes (R,V,B) en un paramètre de luminance L de la forme $\alpha R + \beta V + \gamma B$, où $\alpha, \beta, \gamma$ sont des coefficients déterminés pour l'obtention de ladite visualisation monochrome, caractérisé en ce qu'il comporte des moyens de traitement additionnels (5) pour calculer préalablement pour chaque point de chaque image lesdits coefficients en fonction des variations des différentes composantes (R,V,B) en ce point et à proximité.

2. Système selon la revendication 1, caractérisé en ce que les coefficients ($\alpha, \beta, \gamma$) sont calculés proportionnellement aux gradients (r,v,b) des différentes composantes (R,V,B), selon les relations $\alpha = A.r$ $\beta = A.v$ $\gamma = A.b$ où A est un paramètre quelconque.

3. Système selon la revendication 2, caractérisé en ce que le paramètre A est égal à l'inverse $\dfrac{1}{r+v+b}$ de la somme des modules des gradients (r,v,b).

4. Système selon la revendication 2 ou 3, caractérisé en ce que les moyens de traitement additionnels (5) comportent un circuit de calcul (6) pour calculer et élaborer des gradients (r,v,b) des composantes (R,V,B).

5. Système selon la revendication 4, caractérisé en ce que les moyens de traitement additionnels (5) comportent en outre, un circuit sommateur (7) pour sommer les signaux gradients (r,v,b) et, pour chaque gradient, un circuit diviseur (8) qui divise ledit signal gradient correspondant par ladite somme des gradients pour former lesdits coefficients($\alpha, \beta, \gamma$).

6. Système selon l'une quelconque des revendications précédentes, caractérisé en ce que le traitement étant numérique, le système comprend pour chacune des composantes (R,V,B) une première mémoire vive de type à accès aléatoire (25R,25V,25B) pour stocker les valeurs numériques desdites composantes pour un nombre déterminé de points de l'image avant leur entrée dans lesdits moyens de traitement additionnels (5), une deuxième mémoire vive du type à accès aléatoire(26R,26V,26B) pour stocker le même nombre de coefficients ($\alpha,\beta$, $\gamma$) correspondant à ces points avant leur entrée dans lesdits moyens de traitement (10).

7. Système selon la revendication 6, caractérisé en ce qu'un microprocesseur (15) est utilisé pour effectuer les fonctions des circuits de traitement (10) et de traitement additionnels (5), et est relié auxdites mémoires vives (25R,25V,25B,26R,26V,26B) dont il commande l'écriture et la lecture, ceci afin de délivrer ledit signal L de luminance à l'utilisation (2) par l'intermédiaire d'un circuit d'interfaces de sortie (30).

8. Système selon la revendication 1, caractérisé en ce que les coefficients ($\alpha, \beta, \gamma$) sont calculés respectivement proportionnellement à une fonction monotone du gradient (r,v,b) des différentes composantes (R,V,B).

9. Système selon la revendication 1, caractérisé en ce que les coefficients ($\alpha, \beta, \gamma$) sont calculés respectivement proportionnellement à une fonction monotone des différentes composantes (R,V,B).

0148705

1/2

FIG_1

FIG_2

0148705

# FIG_3